**Europäisches Patentamt**

**European Patent Office**

**Office européen des brevets**

(19)

(11) Numéro de publication: **0 099 790**
**A2**

## (12) DEMANDE DE BREVET EUROPEEN

(21) Numéro de dépôt: **83401343.5**

(22) Date de dépôt: **29.06.83**

(51) Int. Cl.³: **B 60 K 17/04**
**B 60 K 17/30**

(30) Priorité: **21.07.82 FR 8212715**

(43) Date de publication de la demande:
**01.02.84 Bulletin 84/5**

(84) Etats contractants désignés:
**BE DE GB IT LU NL SE**

(71) Demandeur: **RENAULT VEHICULES INDUSTRIELS**
**Société Anonyme dite:**
**129 rue Servient "La Part Dieu"**
**F-69003 Lyon(FR)**

(72) Inventeur: **Germain, Roger**
**75, route de Neuilly en Thelle**
**F-60730 La Chapelle Saint Pierre(FR)**

(74) Mandataire: **Ernst-Schonberg, Michel et al,**
**RNUR - S. 0804 B.P. 103**
**F-92109 Boulogne-Billancourt(FR)**

(54) **Moyeu de roue comportant un engrenage réducteur pour essieu directeur.**

(57) Secteur technique: Moyeu de roue comportant un engrenage réducteur pour essieu directeur.

Caractéristique technique: Moyeu de roue comportant un engrenage réducteur pour essieu directeur, un arbre articulé (1, 201) solidaire d'un élément (13, 213) de joint homocinétique (2, 202) et un pignon planétaire (19, 219) relié cinématiquement à l'arbre articulé (1, 201) qui assure la rotation de satellites (24, 224) qui, à leur tour, engrènent avec une couronne dentée (30, 230) reliée rigidement à un porte-fusée pivotant (31, 231), caractérisé par le fait que l'élément de joint homocinétique (2, 202) se prolonge radialement par les pignons planétaires (19, 219) disposés axialement à l'extérieur de l'axe de pivotement (32, 232) du porte-fusée (31, 231) et qu'un élément porte-satellites (34, 234) est porteur du ou des paliers de roulements (23, 33 - 223, 233) de la roue (27, 227).

Application: essieux directeurs de véhicules routiers.

./...

EP 0 099 790 A2

FIG.2

Moyeu de roue comportant un engrenage réducteur pour essieu
directeur.

L'invention concerne un moyeu de roue du type comportant un engrenage réducteur pour essieu directeur de véhicules routiers, tracteurs agricoles ou autres engins.

On connaît par le brevet GB-A- 972 334 des moyeux de roue comportant un engrenage réducteur du type épicycloïdal dans lequel un
pignon planétaire relié à un arbre d'entraînement assure la rotation de satellites qui, à leur tour, entraînent en rotation une
couronne dentée reliée rigidement au carter de roue du moyeu. Dans
ces constructions connues, l'engrenage réducteur est placé entre
les paliers à roulements utilisés pour le montage de la roue qui
sont disposés entre un élément tel qu'un porte-fusée relié rigidement au châssis du véhicule, et le carter de roue.

Dans d'autres exécutions connues par le brevet FR-A- 2 463 021,
l'entraînement se fait généralement par un différentiel, par l'intermédiaire de demi-arbres d'entraînement disposés de part et
d'autre du différentiel qui sont introduits à leur tour par le
bout d'arbre extérieur dans un alésage de l'élément d'articulation
intérieur tandis que l'élément d'articulation extérieur est relié
au porte-fusée.

On connaît l'intérêt de faire rapprocher l'axe d'articulation du
porte-fusée de la roue avec le centre d'articulation du joint de
transmission, et de réduire l'encombrement axial de l'ensemble du
moyeu constitué par l'engrenage réducteur et par le joint de
transmission.

C'est donc l'objet de l'invention de réaliser un moyeu de roue
directrice à engrenage réducteur comportant un arbre articulé solidaire d'un élément du joint de transmission, un pignon planétaire
relié cinématiquement à l'arbre articulé qui assure la rotation de
satellites qui à leur tour entraînent en rotation une couronne
dentée reliée rigidement au porte-fusée.

Un autre objet de l'invention est de réaliser un moyeu de roue qui absorbe les forces de torsion extérieures communiquées par les roues au cours du braquage sans porter préjudice à la tenue mécanique des boulons d'assemblage du moyeu au porte-fusée.

Un troisième objet de l'invention est de réaliser l'étanchéité simultanée de l'engrenage réducteur et du joint de transmission par l'emploi d'un soufflet d'étanchéité fixe.

Ces objets sont atteints par le moyeu de roue, caractérisé en ce que l'élément d'articulation extérieur se prolonge radialement par un pignon planétaire disposé axialement à l'extérieur de l'axe de pivotement du porte-fusée, ledit pignon planétaire étant en prise avec des satellites montés à rotation dans le porte-satellites associé à la roue et porteur des paliers de roulement de cette roue.

Dans le moyeu ainsi réalisé, il est aisé de choisir la position de l'axe de pivotement du porte-fusée dans le but de réaliser un essieu à déport négatif dont la définition assure une stabilité plus grande de la trajectoire de cet essieu au cours du freinage.

Par suite de la localisation du centre d'articulation du joint de transmission à l'intérieur de l'engrenage réducteur, il est possible de réduire sensiblement l'angle d'articulation du joint par rapport à l'angle de braquage effectif de la roue.

Un autre avantage du moyeu réside dans le fait que l'assemblage de celui-ci ne nécessite plus qu'un nombre réduit de pièces, ce qui a pour effet de réduire le poids de l'ensemble réalisé tout en augmentant l'encombrement radial. Cette manière de procéder augmente sensiblement l'inertie de l'ensemble et, par voie de conséquence, sa rigidité.

D'autres caractéristiques et avantages de l'invention ressortiront de la description de deux exemples de réalisation de celle-ci en référence au dessin annexé dans lequel :

- la figure 1 est une coupe axiale d'un premier mode de réalisation du moyeu ;

- la figure 2 est une coupe axiale d'un deuxième mode de réalisation du moyeu.

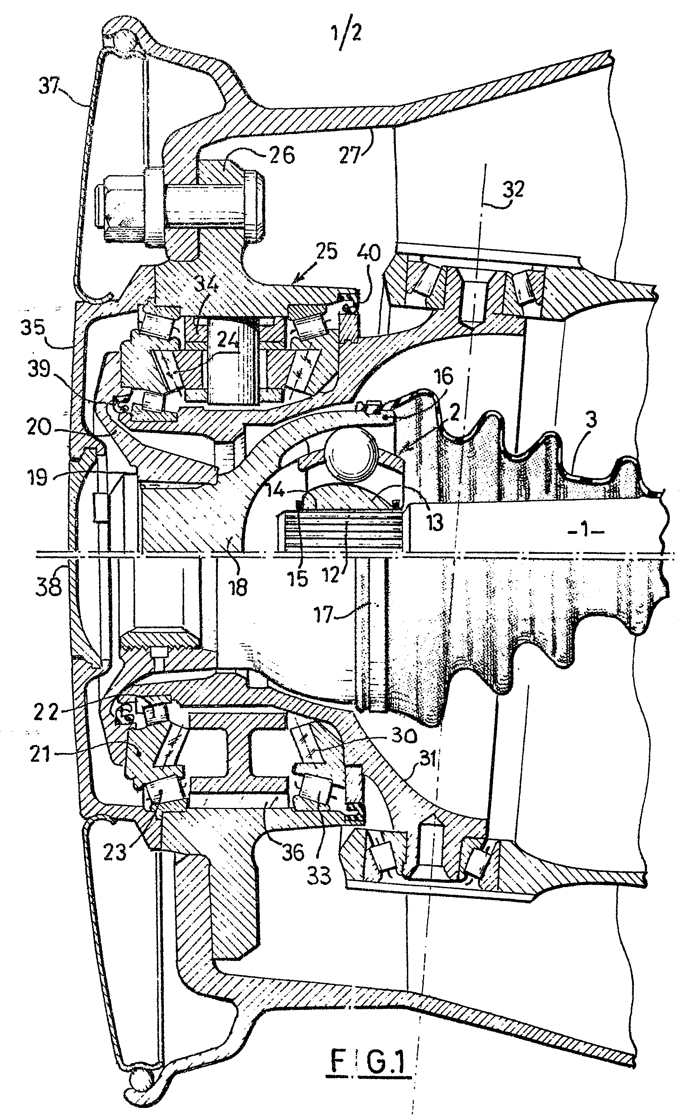

La figure 1 montre le demi-arbre 1 entraîné par un mécanisme différentiel ou par une boîte de vitesses non représenté avec un dispositif d'entraînement (denture) 12 prévu sur le bout d'arbre 1. Un élément intérieur 13 menant d'un joint de transmission homocinétique 2 est enfilé par une denture interne 14 sur le demi-arbre 1 et une bague 15 immobilise axialement l'élément intérieur 13 sur l'arbre 1. L'élément d'articulation extérieur en forme de cloche 16 entoure l'élément intérieur 13 et présente sur son plus grand diamètre une rainure 17 pour la fixation du soufflet 3 avec un collier de serrage. La queue 18 de l'élément d'articulation extérieur 16 porte un pignon planétaire 19 qui est ainsi relié cinématiquement au demi-arbre 1 par l'intermédiaire du joint de transmission. Le pignon planétaire 19 est constitué par un flasque 20 susceptible d'être vissé ou claveté sur la queue 18 et par une couronne rapportée à denture conique 21. La surface interne et la surface externe de la denture 21 constituent respectivement les portées des paliers de roulements à galets coniques 22, 23. La denture 21 du pignon planétaire 19 entraîne un jeu de satellites 24 montés sur un moyeu 25 qui repose sur les paliers 22, 23 et 33 et qui s'étend radialement vers l'extérieur par le flasque de fixation 26 de la jante de la roue 27.

Les satellites 24 engrènent avec une couronne à denture conique fixe 30 solidaire du porte-fusée 31 monté pivotant autour d'un axe 32 sous l'action de biellettes ou bras de commande. Ainsi que cela vient d'être dit pour la denture 21, la denture 30 constitue également la portée du palier 33 à rouleaux coniques dont la bague extérieure est emmanchée dans le moyeu.

Il y a lieu de noter que le moyeu          25 est composé d'un porte-satellites 34 porteur des satellites 24 et d'un flasque de fixation 26 de la jante de roue 27.

Les éléments 34, 25 sont rendus solidaires entre eux au moyen de clavettes 36. Par ailleurs, le porte-satellites 34 est monté avec jeu axial dans le moyeu 25          dans le but d'obtenir une meilleure répartition des efforts de pression de contact entre les diverses dentures d'engrenage en prise. La face frontale du moyeu          25 est fermée par un couvercle 35 qui constitue le flasque extérieur visible de la roue en prolongement de l'enjoliveur 37 de celle-ci. Le couvercle 35 porte de plus un bouchon 38 susceptible de faciliter l'introduction du lubrifiant et le démontage de séparation de la queue 18 de l'élément d'articulation, du planétaire 19.

L'étanchéïté entre le porte-fusée 31 et les parties tournantes du moyeu est assurée par des joints d'étanchéïté 39, 40 qui délimitent une chambre contenant le lubrifiant du mécanisme réducteur.

La transmission du mouvement de rotation de l'arbre 1 à la roue 27 est assuré par le joint homocinétique 2, le planétaire 19, les satellites 24, le porte-satellites 34 et le moyeu 25.

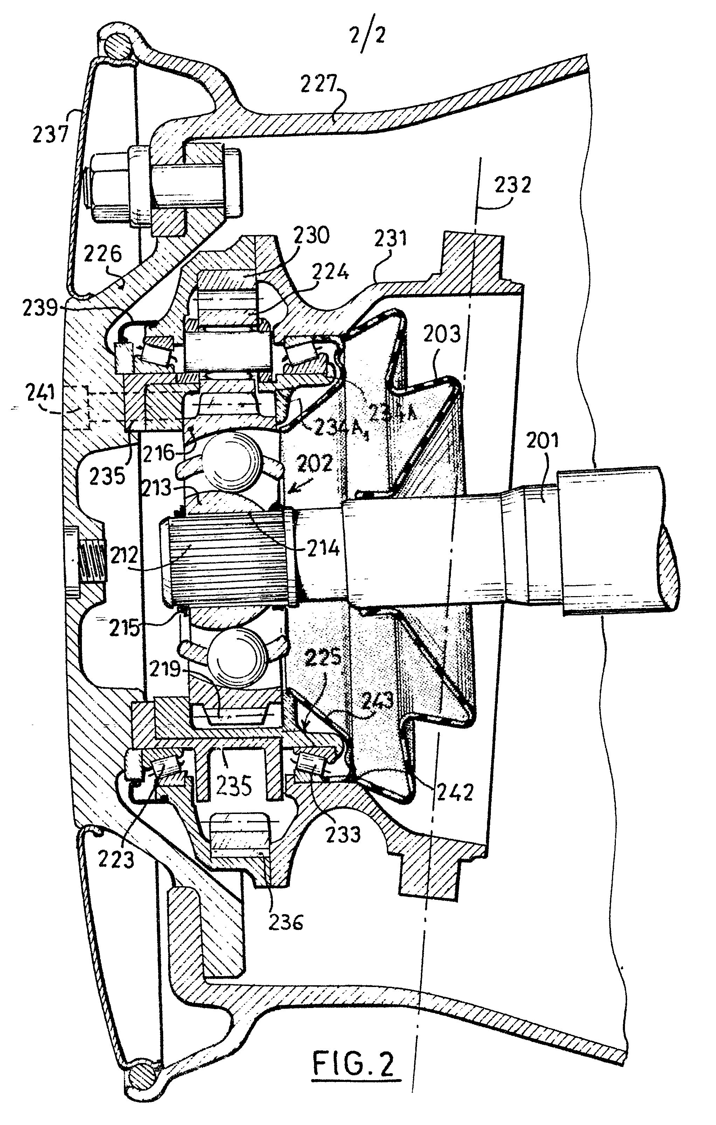

Sur la figure 2 qui représente une coupe axiale d'un deuxième mode de réalisation du moyeu, les organes et éléments homologues de ceux de l'exemple de réalisation illustré à la figure 1 portent des repères analogues au dessus de 200.

Les différences essentielles entre les deux modes de réalisation résident notamment en ce que l'élément extérieur 216 du joint homocinétique 202 est beaucoup plus étroit que dans l'exemple précité, et porte une denture périphérique extérieure 219 directement façonnée dans la matière constitutive du joint. Cette denture peut toutefois être rapportée sur l'élément 216 sous la forme d'une bague dentée soudée par tout procédé moderne (ex : bombardement par faisceau d'électrons).

La denture 219 entraîne un jeu de satellites 224 solidaires d'un porte-satellites 234. Le porte-satellites 234 est également composé d'un élément intérieur 234A et d'un élément extérieur 235. L'élément intérieur 234A possède une gorge radiale en U dont les flancs assurent le guidage latéral de la denture 219 et dont le fond porte un certain nombre d'ouvertures de passage des satellites 224. L'élément extérieur 235 porte les axes de rotation des satellites 224 ainsi que les portées des paliers 223, 233 qui assurent la rotation du porte-satellites par rapport au porte-fusée 231 monté pivotant autour de l'axe 232.

Le porte satellites 234 est rigidement relié à l'élément porteur de la roue constitué par le flasque 226 de fixation de la jante de la roue 227. Le flasque 226 est fixé axialement sur le porte-satellites 234 par des vis 241 et porte l'enjoliveur de la roue 227, et constitue de la sorte le flanc de ladite roue.

L'étanchéïté entre le porte-fusée 231 et les parties tournantes du moyeu est assurée par des joints d'étanchéïté constitués par un joint à lèvre 239 et par un soufflet fixe 203. L'ensemble de l'engrenage réducteur, c'est-à-dire les éléments 219, 224, est ainsi enfermé dans la même chambre de graissage contenant aussi le joint homocinétique 202.

Le soufflet 203 est porté d'une part par une douille à aiguilles fixe et portée par l'arbre 201 et il possède une surface d'étanchéïté annulaire 242 engagée d'autre part dans le porte-fusée sur la portée cylindrique du palier 233. Dans le but de préserver l'engrenage 219, 224 d'une éventuelle pollution par lubrifiant du joint homocinétique, le soufflet 203 se prolonge axialement vers l'élément 216 par un déflecteur 243. Le soufflet 203 est démontable pour favoriser le retrait de la transmission après enlèvement de la bague 234A1. Une couronne dentée 230 avec laquelle engrènent les satellites 224 est solidaire du porte-fusée 231 au moyen de clavettes 236 et est immobilisée axialement entre deux éléments du porte-fusée assemblés le long d'un plan contenant le flanc de la couronne dentée 230.

Sans sortir du cadre de l'invention, il sera bien entendu possible de réduire le nombre de paliers du porte-satellites. Il est notamment possible d'associer un roulement à billes à contacts obliques au porte-satellites et au porte-fusée en lieu et place du palier 233 et de faire porter les axes des satellites par le flasque 226.

REVENDICATIONS

1. Moyeu de roue comportant un engrenage réducteur pour essieu directeur, un arbre articulé (1, 201) solidaire d'un élément (13, 213) de joint homocinétique (2, 202) et un pignon planétaire (19, 219) relié cinématiquement à l'arbre articulé (1, 201) qui assure la rotation de satellites (24, 224) qui, à leur tour, engrènent avec une couronne dentée (30, 230) reliée rigidement à un porte-fusée pivotant (31, 231), caractérisé par le fait que l'élément de joint homocinétique (2, 202) se prolonge radialement par le pignon planétaire (19, 219) disposé axialement à l'extérieur de l'axe de pivotement (32, 232) du porte-fusée (31, 231) et qu'un élément porte-satellites (34, 234) est porteur du ou des paliers de roulements (23, 33 - 223, 233) de la roue (27, 227).

2. Moyeu de roue selon la revendication 1, caractérisé par le fait que le pignon planétaire (19, 219) est porté par l'élément extérieur (16, 216) de joint homocinétique (2, 202).

3. Moyeu de roue selon la revendication 1, caractérisé par le fait que l'élément extérieur (216) de joint homocinétique (202) porte une denture extérieure (219) d'engrènement qui peut être façonnée dans la matière constitutive dudit élément de joint.

4. Moyeu de roue selon la revendication 1, caractérisé par le fait que le moyeu (25, 225) et que le porte-satellites (34, 234) sont rigidement reliés à l'élément porteur (26, 226) et de la jante de la roue (27, 227).

5. Moyeu de roue selon l'une quelconque des revendications 1 à 4, caractérisé par le fait que l'engrenage réducteur (219, 224) et le joint homocinétique (202) sont enfermés dans une même chambre de graissage.

6. Moyeu de roue selon la revendication 5, caractérisé par le fait que la chambre de graissage est isolée par un soufflet fixe (203) porté par l'arbre articulé (201), qui est muni de surfaces d'étanchéité (242) annulaires en appui sur le porte-fusée (231).

0099790

7. Moyeu de roue selon la revendication 6, caractérisé par le fait que le soufflet (203) se prolonge axialement au-delà de la surface d'étanchéïté annulaire par un déflecteur (243).

F I G.1

0099790

1/2

0099790

2/2

FIG.2